(19) Europäisches Patentamt

European Patent Office

Office européen des brevets

(11) **EP 2 779 073 A1**

(12) **EUROPEAN PATENT APPLICATION**

(43) Date of publication:
**17.09.2014 Bulletin 2014/38**

(51) Int Cl.:
***G06Q 30/02*** *(2012.01)*

(21) Application number: **14158719.6**

(22) Date of filing: **11.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2013 US 201313831337**

(71) Applicant: **Yume, Inc.**
**Redwood City, CA 94063 (US)**

(72) Inventors:
• **Sankaran, Ayyappan**
**San Jose, CA California 95138 (US)**
• **Kadambi, Jayant**
**Palo Alto, CA California 94306 (US)**
• **Damerdji, Halim**
**Los Altos, CA California 94022 (US)**

(74) Representative: **TBK**
**Bavariaring 4-6**
**80336 München (DE)**

(54) **Method and system for determining changes in brand awareness after exposure to on-line advertisements**

(57) A method for determining changes in brand awareness after exposures to on-line advertisements includes: first selecting and monitoring a test group including a first plurality of members and a control group including a second plurality of members from a pool of users, whereby the first plurality of members and the second plurality of members do not overlap; second exposing the test group, but not the control group, to an advertisement associated with a brand; third conducting surveys of the first plurality of members and the second plurality of members with respect to the brand; and fourth analyzing the monitoring of the test group and the control group to determine a brand lift index with respect to the advertisement.

FIG. 3

**Description**

BACKGROUND

Advertising is a common way for sellers of goods and/or services to increase brand awareness. With traditional advertising media, such as television and print media, an advertisement may be seen by a wide demographic audience. Generally, only a small percentage of the audience will have any interest in ultimately purchasing the goods or services. Also, with traditional media, there is typically a limited supply of space for advertisements. In the art, the amount of resources (e.g., physical space, time, etc.) available for advertising is sometimes referred to as "inventory." Due to its scarcity, premium inventory for traditional advertising media can be quite expensive.

With the advent of the Internet and the World Wide Web ("web") the opportunity for online advertising has increased dramatically. Since web technology can generate an advertising message image (called an "impression") each time a web page (or other platform such as a smartphone, tablet computer, game unit, etc.) is accessed, and since multiple members can access web page content simultaneously, there is also an everincreasing amount of inventory. This tends to make web advertising more cost-effective than many forms of advertising in traditional media.

Besides cost, web advertising has a number of additional advantages. For one, particular demographic groups can be targeted by the selection of an appropriate website ("publisher"). For another, interaction with a web advertisement can be used to determine viewer interest. Also, web advertising tends to be more flexible with the choice of timing and placement of ads.

Since there is a significant cost to placing advertisements, even over the Internet, advertisers are keenly interested in the effectiveness of their advertisements. In particular, advertisers are interested on whether the awareness of the brand of the product or service that they are selling has increased due to their investment in advertising, and by how much. In this way, advertisers can maximize their return on their advertising campaigns.

Traditionally, the way an advertiser realized that its brand awareness had increased due to an advertising campaign was either to experience a detectible increase in interest in their products or services after the campaign was over or by conducting oral or written surveys of the viewing public. For example, an advertiser could run an advertisement for a period of time and could then see if their sales had increased. If there were no other variables introduced other than the advertisement itself, it could be reasonably surmised that a rise in sales implied an increase in brand awareness by the consuming public. However, lead times for such a process, and errors due to other factors such as the state of the economy, competition of others, prices changes, etc. all tended to obscure the relationship between the advertising campaign and the results. Furthermore, if the advertiser was running a campaign including a number of advertisements (sometimes referred to as "creatives") it would not be possible to determine which of the advertisements were effective and which were ineffective without costly oral or written surveys. Only then would the advertiser know which advertisements of the campaign should be run and which ones should be omitted.

These and other limitations of the prior art will become apparent to those of skill in the art upon a reading of the following descriptions and a study of the several figures of the drawing.

SUMMARY

Various examples are set forth herein for the purpose of illustrating various combinations of elements and acts within the scope of the disclosures of the specification and drawings. As will be apparent to those of skill in the art, other combinations of elements and acts, and variations thereof, are also supported herein.

In an embodiment, set forth by way of example and not limitation, a method for determining changes in brand awareness after exposures to on-line advertisements includes: first selecting and monitoring a test group including a first plurality of members and a control group including a second plurality of members from a pool of users, whereby the first plurality of members and the second plurality of members do not overlap; second exposing the test group, but not the control group, to an advertisement associated with a brand; third conducting surveys of the first plurality of members and the second plurality of members with respect to the brand; and fourth analyzing the monitoring of the test group and the control group to determine a brand lift index with respect to the advertisement.

A method for surveying users of websites for brand awareness includes: assigning cookies randomly for a test group, a control group and a general group during a first period of time; exposing neither the test group nor the control group to a test advertisement for a second period of time; exposing the test group, but not the control group, to the test advertisement for a third period of time; and surveying both the test group and the control group concerning their awareness of a brand associated with the test advertisement during a fourth period of time.

A system for determining changes in brand awareness including: an advertiser server including a processor, memory and a network connection, wherein the advertiser server includes program instructions stored in the memory and executable on the processor including: code segments first selecting and monitoring a test group and a control group over the network connection, where the test group comprises a first plurality of members and the control group comprises a second plurality of members from a pool of users; code segments second exposing the test group, but not the control group, to an advertisement associated with a brand over the network connection; code segments third conducting surveys of the first plurality of members and the second plurality of members with respect to the brand over the network connection; and code segments fourth analyzing the monitoring of the test group and the control group to determine a brand lift index with respect to the advertisement.

These and other examples of combinations of elements and acts supported herein as well as advantages thereof will become apparent to those of skill in the art upon a reading of the following descriptions and a study of the several figures of the drawing.

BRIEF DESCRIPTION OF THE DRAWINGS

Several examples will now be described with reference to the drawings, wherein like elements and/or acts are provided with like reference numerals. The examples are intended to illustrate, not limit, concepts disclosed herein. The drawings include the following figures:

Figure 1 illustrates an example system supporting features and embodiments set forth herein;

Figure 2 is a block diagram of an example computer, computerized device, proxy and/or server which may form a part of the system of Fig. 1;

Figure 3 is a flow diagram, set forth by way of example and not limitation, illustrating a method for determining changes in brand awareness after exposure to on-line advertisements; and

Figure 4 is a flow diagram, set forth by way of example and not limitation, illustrating an alternative surveying method for the method of Fig. 3.

DETAILED DESCRIPTION

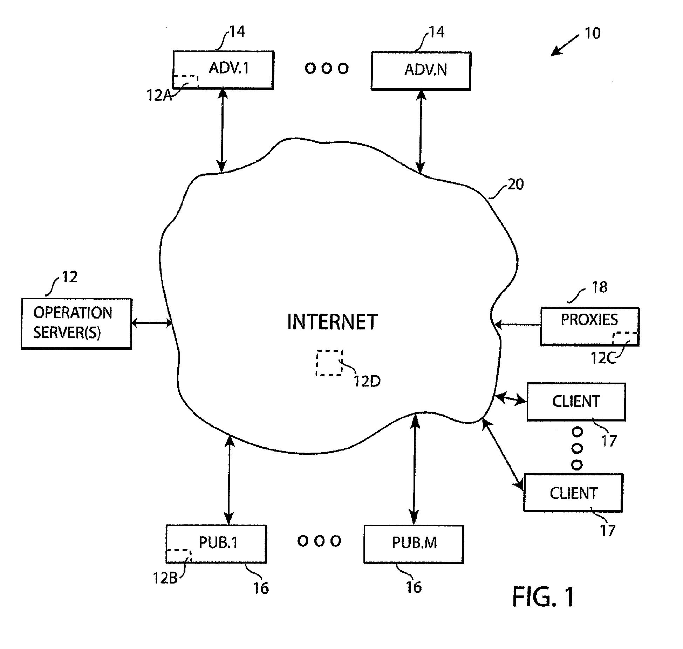

Fig. 1 illustrates a system 10 supporting a process for determining changes in brand awareness in accordance with a non-limiting example. In this example, the system 10 includes one or more operation servers 12, one or more advertiser computers 14, one or more publisher server systems 16, and a plurality of client computers and/or devices 17. The system at 10 may further include other computers, servers or computerized systems such as proxies 18. In this example, the operation servers 12, advertiser computers 14, publisher server systems 16, client computers and/or device 17 and proxies 18 can communicate by a wide area network such as the Internet 20 (also known as a "global network" or a "wide area network" or "WAN" operating with TCP/IP packet protocols).

The operation servers 12 can be implemented as a single server or as a number of servers, such as a server farm and/or virtual servers, as will be appreciated by those of skill in the art. Alternatively, the functionality of the operation servers 12 may be implemented elsewhere in the system 10 such as on an advertiser computer 14, as indicated at 12A, on the publisher server system 16, as indicated at 12B, on a proxy 18 as indicated at 12C or as part as cloud computing as indicated at 12D, all being non-limiting examples. As will be appreciated by those of skill in the art, the processes of operation servers 12 may be distributed to these systems within system 10.

As used herein, the term "publisher" refers to an entity or entities maintaining platforms which display advertisements ("ads") to users. The term "advertiser" refers to an entity or entities which provide advertisements to publishers. For example, an "ad agency" or "ad network" is considered to be an advertiser because they provide advertisements to publishers on behalf of their clients.

In an example, the operation servers provide middleman services between the advertisers and the publishers to facilitate the buying and selling of advertisements over the Internet. In other examples, the operation server(s) provide middleman and/or facilitation services for client computers and resource server systems to enhance a variety of e-commerce activities.

In the example of Fig. 1, the system 10 includes a plurality of advertiser computers 14 {ADV. 1, ADV. 2, ..., ADV. N}. ADV.1 can be, for example, a manufacturer of soft drinks, ADV. 2 can be a computer manufacturer and ADV. N can be, for example, an accounting firm. Alternatively, an advertiser can be an advertising agency acting as a middleman in the purchase of advertising for a client. While each of the advertising computers 14 may be implemented as a single computer, such as a personal computer or computer workstation, they can also represent other computer configurations, such as a computing cluster on a local area network (LAN).

The publisher server systems 16 can each represent one or more servers, such as a server farm. In the example of Fig. 1, the system 10 includes a plurality of publisher server systems 16 {PUB. 1, PUB. 2, ..., PUB. M}. For example, PUB. 1 can be an Internet portal, PUB. 2 can be a search engine, and PUB. M can be a news website. As noted previously, one or more of the publisher server systems 16 can implement some or all of the functionality of operation servers 12.

Client computers 17 can access, for example, the publisher servers 16 via the Internet 20. A user of a client computer 16 can, for example, visit a website hosted by a publisher server 16 using a web browser. Proxies 18 can be computers, servers, or clusters of servers which serve as intermediaries or proxies between the operation servers, advertising computers and/or publisher server systems 16. As noted previously, some or all of the functionality of operation servers 12 may be implemented on proxies 18.

It will again be noted that the system 10 as illustrated in Fig. 1 is but one example of such a system. By way of non-limiting example, the advertiser computers 14 can be generalized to be virtually any form of computer or computerized device. By way of further non-limiting example, the publisher server systems 16 can be generalized to be virtually any form of resource server systems. It will therefore be appreciated that while certain example as described herein are directed to an e-commerce advertising sale and purchasing that there are other many other examples which can be implemented by the system 10 as described herein.

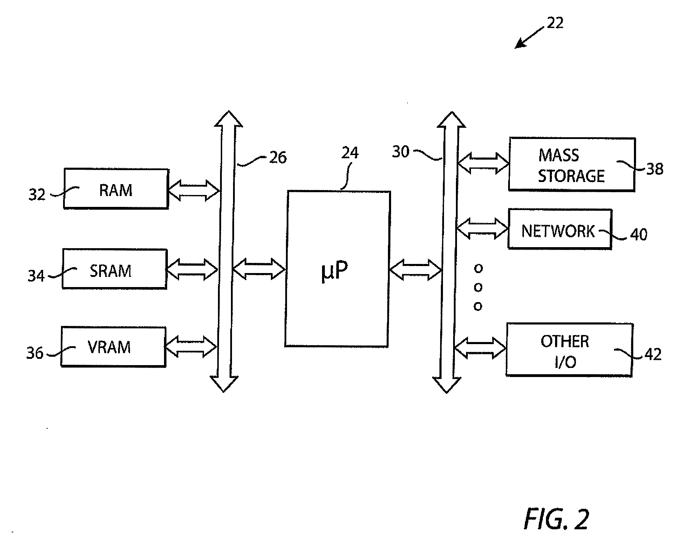

Fig. 2 is a simplified block diagram of a computer and/or server 22 suitable for use in system 10. Such computers and/or servers are available from a number of sources including Hewlett Packard Company of Palo Alto, California, Dell, Inc. of Austin Texas, Apple, Inc. of Cupertino, California, etc.

By way of non-limiting example, computer 22 includes a microprocessor 24 coupled to a memory bus 26 and an input/output (I/O) bus 30. A number of memory and/or other high speed devices may be coupled to memory bus 26 such as the RAM 32, SRAM 34 and VRAM 36. Attached to the I/O bus 30 are various I/O devices such as mass storage 38, network interface 40, and other I/O 42. As will be appreciated by those of skill in the art, there are a number of computer readable media available to the microprocessor 24 such as the RAM 32, SRAM 34, VRAM 36 and mass storage 38. The network interface 40 and other I/O 42 also may include computer readable media such as registers, caches, buffers, etc. Mass storage 38 can be of various types including hard disk drives, optical drives and flash drives, to name a few.

With respect to a client computer 17, the other I/O 42 typically includes a monitor, a keyboard, and a mouse (not shown). A client computer 17 includes an operating system, typically stored in mass storage 38 and one or more application programs running on the operating system. One such application program is a web browser available from a number of sources including Microsoft Corporation (Internet Explorer®), Google, Inc. (Chrome®), Apple, Inc. (Safari®) and Mozilla Foundation (Firefox®). Associated with those web browsers are "cookies", which aid in the web browsing process. These application programs and cookies are also typically stored in mass storage 38.

It should be noted that other computerized devices may be within the scope of the system of Fig. 1. For example, many computerized devices, such as cellular telephones, personal digital assistants (PDAs), network appliances, tablet computers, game units and other portable and non-portable devices can derive information, provide information, or otherwise interact with system 10. In many cases, these devices support electronic advertising. Typically, such devices include user identification ("ID") numbers which allow a remote server to maintain log interactions with the computerized devices. In many cases, such computerized devices can replace the functionality of a client computer 17.

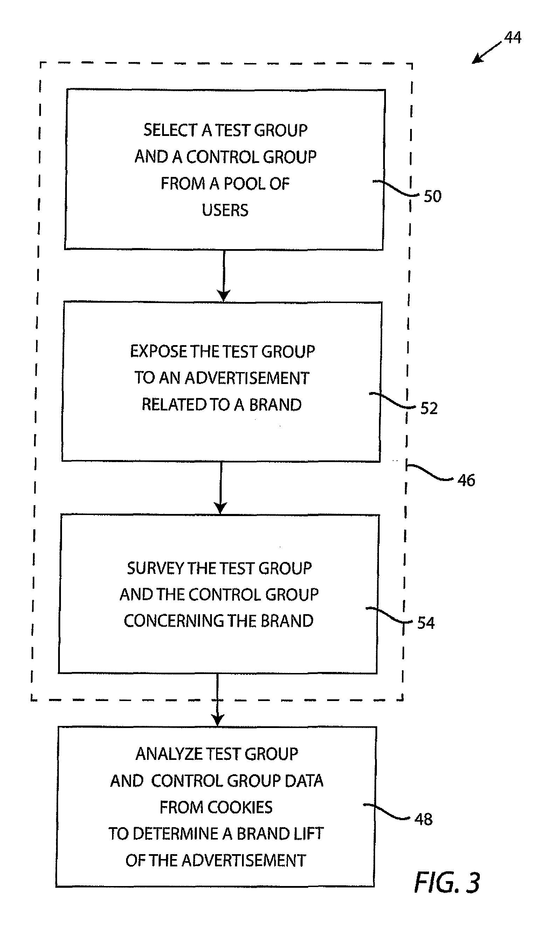

Fig. 3 is a flow diagram of a process 44, set forth by way of example and not limitation, for determining changes in brand awareness after exposure to on-line advertisements. Process 44 can be implemented on one or more servers of system 10 including, but not limited to, advertiser servers 14 and/or operation servers 12. Process 44 may also be distributed on a plurality of servers, or may be performed by cloud servers coupled to Internet 20.

In this non-limiting example, process 44 includes a brand awareness survey process 46 and a brand lift analysis 48. The brand awareness process 46 includes an operation 50 wherein a test group and a control group are selected from a pool of users (*e.g.* website viewers, game users, "app" users, etc.). The test group includes a first plurality of members and the control group includes a second plurality of member and the pool of users who have visited a test website and requested an advertisement from an advertiser.

As used herein, a test website is a publisher website selected by an advertiser to determine a "brand lift" of a test advertisement. Unique visitors are unique users as opposed to repeat users. Also, the terms "member", "user", "viewer" and "individual" are often used synonymously herein to refer to the members of the test group and the control group.

After selecting the members of the test group and control group, process 44 exposes only the test group to the test advertisement in an operation 52. Then, in an operation 54, both the test group and the control group are surveyed concerning the brand being advertised in the test advertisement. In an embodiment, the results of the surveys are stored in logs of the advertiser running the surveys while certain information concerning the surveys are stored the advertiser's third party cookies.

Operation 48 analyzes the test group and control group data to determine a brand lift of the test advertisement. By way of non-limiting example, the survey data of the third party cookies is analyzed such that the brand awareness of the control group and the brand awareness of the test group can be quantified. Since the only significant difference between the control group and the test group is the test group's exposure to the test advertisement, it can be assumed that any increase in brand awareness by the test group is due to the test advertisement.

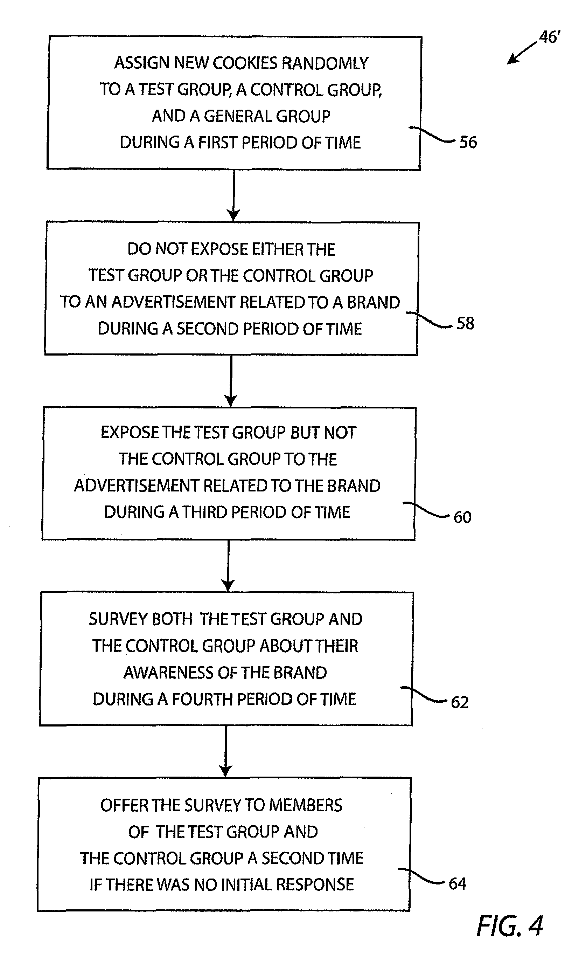

Fig. 4 is a flow diagram of an alternative brand awareness survey process 46', set forth by way of example and not limitation. Process 46' begins with an operation 56 with the random assignment of new cookies to a test group, a control group, and a general group during a first period of time. The new cookies, in this non-limiting embodiment, are third party cookies provided by an advertiser who wishes to use a test advertisement to determine brand lift. Again, the advertiser could be the entity associated with the brand, an ad agency, an ad network, etc. Next, in an operation 58, neither the test group nor the control group is exposed to the test advertisement during a second period of time. This "time buffer" or "forgetness" period is to reduce the effects of prior exposure to the brand.

After the time buffer, the test group, but not the control group, is exposed to the test advertisement that is related to the brand during a third period of time in an operation 60. Members of the test group may be exposed one or more times during this third period to the test advertisement. Next, in an operation 62, both the test group and the control group are offered a survey related to their awareness of the brand during a fourth period of time. Presumably, the test group will have higher brand awareness than the control group due to the test group's exposure to the test advertisement in the third period of time. Members of the test group and the control group who respond to the advertisement are join the general group and are not surveyed again. For members of the test group and the control group who do not take the survey when it is first offered a second opportunity to take the survey will be presented in an operation 64. After the members either take the survey offered the second time or again decline to take the survey, they are put into the general group.

It will be appreciated that there are a number of ways for implementing the processes described with respect to Figs. 3 and 4. Accordingly, the following examples are presented for the purpose of clarification and not limitation.

EXAMPLE 1 -A BRAND AWARENESS SURVEY PROCESS

In this example, a brand awareness survey process conducts a single survey ("test survey") on a single website ("test website") with regards to an advertisement ("test advertisement") related to a brand is set forth by way of example and not limitation. This example process is implemented using a feature of web browsers known as "cookies." However, it will be appreciated that other technologies than cookie technologies are also suitable for collecting survey data.

As is well known to those of skill in the art, cookies are HTTP headers that are transferred between servers and web browsers over a network, such as the Internet. Cookies can serve a variety of purposes including streamlining many browsing activities allowing for a more personalized user experience. For example, cookies can store preferences and other information about a user which can be accessed by the websites with which they are associated.

A persistent cookie will outlast a user's session at a website. For example, if a persistent cookie has a "Max-Age" set to 1 year then, within the year, the initial value set in that cookie is sent to the advertiser's server each time the user is associated with an ad request. Since persistent cookies can include such information as to how the user came to the website, persistent cookies are sometimes also called "tracking cookies."

Third party cookies are cookies set with domains different from that shown in the address bar of the browser. Third party cookies are often provided when content from a website is derived from a different domain. By way of non-limiting example, an advertiser server might provide a third party cookie to a website at a publisher server along with advertising content. These third party cookies are subsequently available to the advertising server upon repeat visits by the same user.

In this non-limiting example, third party cookies of the advertiser are used to collect information about the test group and the control group. For example, the following information may be provided in the cookies:

•    the time the cookie was created
•    the times this cookie was seen and not served an advertisement, if applicable
•    the times this cookie was seen and served an advertisement other than the test advertisement, if applicable
•    the times this cookie was seen and served the test advertisement, if applicable
•    the time this cookie was seen and got subjected to the survey (along with its results)
•    the time this cookie was seen and got subjected to the survey a second time if applicable (along with its results)

A brand awareness survey process, set forth by way of example but not limitation, assigns members to either a test group, a control group, or a general group from a pool of users by assigning third party cookies to the members. In this example, the individual members of the three groups do not overlap. The number of individuals in each group can be the same, substantially the same, or different.

An example assignment process is as follows. Starting at a time to, cookies are assigned according to a random mechanism with 3 outcomes: test, control, and general. The cookies contain information about the survey with which they are associated and serve as user IDs. In this example, the cookies are associated with only one survey, but it will be appreciated by those of ordinary skill in the art that the cookies could also be associated with multiple surveys. The "general" cookies, in this example, are unused by the survey process.

A first time period $P_1$ ranges in time from to to $t_1$. In this example, cookies with a new format are randomly assigned to the three groups during the first time period P1. After a sufficiently long first time period P1, most of the cookies for the three groups will be new cookies. For example, if P1 = 4 weeks, the vast majority of the cookies will have the new format. Any cookies not having the new format after the end of the first time period P1 are, in this non-limiting example, assigned to the general group.

A second time period P2 ranges in time from $t_1$ to $t_2$. During this period, neither the test group nor the control group are subjected to and advertisement that is being tested for brand lift, in this non-limiting example. The second time period P2 is a "buffer" or "forgetness" period. The purpose of this period is to lessen the effects of brand awareness on the test group and the control group should any of the members ("individuals") have previously been exposed to the test advertisement.

More particularly, in this example, the control group, after time $t_1$ until the surveying process is over will not be subjected to the test advertisement. During the second time period P2, the test group members are also not subjected to the test advertisement. This time interval "buffer" helps members from the test group "forget" the test advertisement in case they were previously exposed to it.

A third time period P3 ranges in time from $t_2$ to $t_3$. In this non-limiting example, test group members may be subject to the test advertisement should they be at the test website during the third time period P3. The third time period P3 can be, by way of non-limiting example, the same length of time as a typical Internet advertising campaign, *e.g.* six to eight weeks.

A fourth time period P4 ranges in time from $t_3$ to $t_4$. During this period, members of both the test group and the control group are subjected to brief brand-awareness surveys, by way of non-limiting example. By "survey" it is meant that one or more questions are presented to a member for response. In this non-limiting example, the surveys are one or two questions long to encourage participation in the survey process.

It will be appreciated that not all members of the test group and the control group will be subjected to the survey during the fourth time period P4. For example, not all of the members of the two groups may return a publisher's site, or make an ad request, within the fourth time period P4. Also, members may have been subject to an alternative survey and not exposed to the test survey.

It will also be appreciated by those of skill in the art that the members of the two groups should be surveyed as close as possible to each other in time, and ideally at time $t_3$ (right after the second time period P2 ends), but this is generally unpractical. In this non-limiting example, the third time period P3 should be relatively small, e.g. 2 to 7 days.

Should a member of either the test group or the control group answer the survey they will join the general group. That is, once a member of either group answers the survey, they will not be surveyed again. Should a member of either the test group or the control group not answer a survey when it is first presented (referred to herein as "first non-respondents"), they will be presented with the survey a second time if "seen" again by making an ad request. Whether or not they respond to the second survey, the first non-respondents will then join the general group. Data collection is over at time $t_4$.

EXAMPLE 2 - A BRAND LIFT ANALYSIS

In this example, the cookies of the survey process of Example 1 are logged in an event log from time to to $t_4$. An advertisement request within the time period $t_0$ - $t_4$ will be referred to herein as an "event time." Cookies only seen once in the event log indicate that that user had only requested an advertisement once, or that the cookie had been deleted and recreated.

For cookies "seen" multiple times (e.g. there are multiple event times stored in the cookie), the elapsed times ("inter-visit times") between the test advertisement requests are calculated. In a non-limiting embodiment, statistical independence of the inter-visit times is checked, as well as statistical independence of the inter-visit times conditional on the total number of visits.

By way of non-limiting example, a probability of the number of revisits (0, 1, 2, ...) can be built. If the inter-event times appear to be interdependent, a single distribution can be built for the inter-event times. However, if the inter-events appear to be statistically independent, a distribution can be created for each of the inter-visit times (e.g. between the 1st and 2nd event times, the 2nd and 3rd event times, etc.).

Using the above mentioned probabilities, the expected number of event times from a member within predetermined time intervals can be calculated. Once the time $t_2$ is set, time $t_3$ is chosen such that a sufficiently large number of members of the test group will have the chance to be subjected to the test advertisement two or three times, in this non-limiting example. In alternative examples with multiple campaigns, the time period should be set such that an expected number of event times is more than 20 for most members.

Once $t_3$ is set, the time $t_4$ is picked so that the expected number of visits within the fourth period of time P4 is at least between one and two but preferably higher than two so that a first non-respondent has a good chance to be exposed to the survey a second time, as long as P4 does not get to be too long.

As used herein, the term "brand lift" will refer to the increase in brand awareness of a member of the test group after being exposed to the test advertisement. Brand lift is preferably a positive number, but could also be zero (e.g. when the test advertisement had no effect on the user) or, rarely, negative (e.g. where the user had less brand awareness after being exposed to the test advertisement).

For this calculation, let "α" be a measure of brand awareness of members of the control group, and "β" be a measure of brand awareness of members of the test group. Brand lift, as a percentage increase, is then given by:

$$100 * \frac{\beta - \alpha}{\alpha}$$

As will be appreciated by those of skill in the art, there are a number of ways of calculating these brand awareness variables. The following method is set forth by way of example and not limitation and uses the following conventions:

- Call $R(g; u; 1; 1)$ the response of member $u$ to the first question of the survey where

  o member $u$ is a member of the control group, and was never exposed to the survey;
  o member $u$ showed up within the survey time;
  o the advertisement server received a request to serve an advertisement and the decision was made to subject member $u$ to the survey;
  o member $u$ responded to the survey; and
  o member $u$ responded to the first question of the survey

- Call $A(g; 1)$ the set of such members. If member $u$ decides not to respond, call $R(g; u; 2; 1)$ his/her response if subjected to the survey a second time. Hence,

  - Member $u$ is a member of the control group, was exposed once to the survey and did not respond
  - Member $u$ showed up anew within the survey period
  - The advertisement server received a request to serve an advertisement and decided to subject member $u$ to the survey
  - Member $u$ decided to respond to the survey this time
  - Member $u$ decided to respond to the first question of the survey

Denote $A(g; 2)$ the set of such members.

The variable $\alpha$ can then be defined as:

$$\alpha \equiv \frac{\sum_{u \in A(g;1)} R(g; u; 1, 1) + \sum_{u \in A(g;2)} R(g; u; 2, 1)}{N(g; 1) + N(g; 2)}$$

It should be noted that the above formula assumes that the that the sum in the denominator positive.

For the test group, call $N(t; 1)$ and $N(t; 2)$ the respective number of elements within the sets $A(t; 1)$ and $A(t; 2)$, where the sets are defined similarly but for elements of the test group. Denote $N(t; k; 1)$ and $N(t; k; 2)$ the respective number of elements of sets $A(t; k; 1)$ and $A(t; k; 2)$, where $A(t; k; 1)$ and $A(t; k; 2)$ are the subsets of $A(t; 1)$ and $A(t; 2)$, respectively, whose elements got exposed k times to the test advertisement within the test advertisement-exposure window of time period P3. Call $R(t; u; k; 1; 1)$ the response to the first question of member $u$ from $A(t; k; 1)$, and similarly for $R(t; u; k; 2; 1)$.

The variable $\beta$ can then be defined as:

$$\beta \equiv \frac{\sum_{k=1}^{\infty} \sum_{u \in A(t;k;1)} R(t;u;k;1,1) + \sum_{k=1}^{\infty} \sum_{u \in A(t;k;2)} R(t;u;k;2,1)}{\sum_{k=1}^{\infty} N(t;k;1) + \sum_{k=1}^{\infty} N(t;k;2)}$$

For even more granular quantities, the variable $\beta$ can be defined as:

$$\beta(k) \equiv \frac{\sum_{u \in A(t;k;1)} R(t;u;k;1,1) + \sum_{u \in A(t;k;2)} R(t;u;k;2,1)}{N(t;k;1) + N(t;k;2)}$$

Where the brand lift is calculated as:

$$\text{brand lift}(k) = 100 * \frac{\beta(k) - \alpha}{\alpha}$$

It will be appreciated by those of skill in the art that a number of useful statistics concerning a change in brand awareness with respect to a test advertisement can be obtained by the aforementioned process. For example, an overall "brand lift index" can be calculated as a constant and also as a function of several variables. For example, brand lift relative to the frequency of exposure to the test advertisement or brand lift since the last exposure to the test advertisement can be calculated from the data derived from the cookies.

Although various examples have been described using specific terms and devices, such description is for illustrative purposes only. For example, many of the examples set forth herein refer to the use of cookies associated with a web browser as a user ID. However, it will be appreciated that other devices, such as electronic game units, are provided with unique user IDs that can be used for similar purposes. In any case, information concerning the user's interaction with an advertisement and the results of one or more surveys can be logged at an advertiser's server.

It will also be appreciated that the words used are words of description rather than of limitation. It is to be understood that changes and variations may be made by those of ordinary skill in the art without departing from the spirit or the scope of any examples described herein. In addition, it should be understood that aspects of various other examples may be interchanged either in whole or in part. It is therefore intended that the claims herein and hereafter presented be interpreted in accordance with their true spirit and scope and without limitation or estoppel.

A method for determining changes in brand awareness after exposures to on-line advertisements includes: first selecting and monitoring a test group including a first plurality of members and a control group including a second plurality of members from a pool of users, whereby the first plurality of members and the second plurality of members do not overlap; second exposing the test group, but not the control group, to an advertisement associated with a brand; third conducting surveys of the first plurality of members and the second plurality of members with respect to the brand; and fourth analyzing the monitoring of the test group and the control group to determine a brand lift index with respect to the advertisement.

## Claims

1. A method for determining changes in brand awareness after exposures to on-line advertisements comprising:

first selecting and monitoring a test group comprising a first plurality of members and a control group comprising a second plurality of members from a pool of users, whereby the first plurality of members and the second plurality of members do not overlap;
second exposing the test group, but not the control group, to an advertisement associated with a brand;
third conducting surveys of the first plurality of members and the second plurality of members with respect to the brand; and

fourth analyzing the monitoring of the test group and the control group to determine a brand lift index with respect to the advertisement.

2. A method for determining changes in brand awareness after exposures to on-line advertisements as recited in claim 1 further comprising selecting a general group comprising a third plurality of members from the pool of users.

3. A method for determining changes in brand awareness after exposures to on-line advertisements as recited in claim 2 wherein members of the test group, the control group, and the general group are chosen randomly.

4. A method for determining changes in brand awareness after exposures to on-line advertisements as recited in claim 3 wherein members are selected and monitored by the assignment of a third party cookie by an advertiser.

5. A method for determining changes in brand awareness after exposures to on-line advertisements as recited in claim 4 wherein a member is exposed to a test advertisement related to the brand by the advertiser.

6. A method for determining changes in brand awareness after exposures to on-line advertisements as recited in claim 5 further comprising offering an on-line survey to each of the first plurality of members and the second plurality of members and moving members who responded to the on-line survey to the general group.

7. A method for determining changes in brand awareness after exposures to on-line advertisements as recited in claim 6 further comprising offering members who did not take the on-line survey the first time that it was offered a second chance to take the on-line survey.

8. A method for determining changes in brand awareness after exposures to on-line advertisements as recited in claim 7 further comprising moving the members who were offered a second chance to take the on-line survey to the general group after they either take the on-line survey or decline to take the on-line survey.

9. A method for determining changes in brand awareness after exposures to on-line advertisements as recited in claim 8 further comprising analyzing cookies of the test group and the control group to determine a brand lift index.

10. A method for determining changes in brand awareness after exposures to on-line advertisements as recited in claim 9 wherein a percentage brand lift is calculated as:

$$100 * (\beta - \alpha)/\alpha$$

where $\beta$ is a composite brand awareness of the control group and $\alpha$ is a composite brand awareness of the test group.

11. A method for surveying users of websites for brand awareness comprising:

assigning cookies randomly for a test group, a control group and a general group during a first period of time; exposing neither the test group nor the control group to a test advertisement for a second period of time; exposing the test group, but not the control group, to the test advertisement for a third period of time; and surveying both the test group and the control group concerning their awareness of a brand associated with the test advertisement during a fourth period of time.

12. A method for surveying users of websites for brand awareness as recited in claim 11 wherein the cookies are third party cookies of an advertiser.

13. A method for surveying users of websites for brand awareness as recited in claim 12 wherein members of the test group and the control group are moved to the general group after responding to a survey.

14. A method for surveying users of websites for brand awareness as recited in claim 13 wherein members of the test group and the control group are given a second chance to respond to the survey.

15. A method for surveying users of websites for brand awareness as recited in claim 14 wherein members of the test group and the control group are moved to the general group after they are given the second chance to respond to the survey.

16. A method for determining changes in brand awareness after exposures to on-line advertisements wherein the third party cookies include the results of the survey.

17. A system for determining changes in brand awareness including:

an advertiser server including a processor, memory and a network connection, wherein the advertiser server includes program instructions stored in the memory and executable on the processor including:

code segments first selecting and monitoring a test group and a control group over the network connection, where the test group comprises a first plurality of members and the control group comprises a second plurality of members from a pool of users;

code segments second exposing the test group, but not the control group, to an advertisement associated with a brand over the network connection;

code segments third conducting surveys of the first plurality of members and the second plurality of members with respect to the brand over the network connection; and

code segments fourth analyzing the monitoring of the test group and the control group to determine a brand lift index with respect to the advertisement.

18. A system for determining changes in brand awareness as recited in claim 17 further comprising code segments providing third party cookies to members of the test group and the control group over the network connection.

19. A system for determining changes in brand awareness as recited in claim 18 wherein members of the test group and the control group are chosen randomly.

20. A system for determining changes in brand awareness as recited in claim 19 wherein information concerning the surveys are stored in the third party cookies.

FIG. 1

FIG. 2

FIG. 3

46'

ASSIGN NEW COOKIES RANDOMLY
TO A TEST GROUP, A CONTROL GROUP,
AND A GENERAL GROUP
DURING A FIRST PERIOD OF TIME
— 56

DO NOT EXPOSE EITHER THE
TEST GROUP OR THE CONTROL GROUP
TO AN ADVERTISEMENT RELATED TO A BRAND
DURING A SECOND PERIOD OF TIME
— 58

EXPOSE THE TEST GROUP BUT NOT
THE CONTROL GROUP TO THE
ADVERTISEMENT RELATED TO THE BRAND
DURING A THIRD PERIOD OF TIME
— 60

SURVEY BOTH THE TEST GROUP AND
THE CONTROL GROUP ABOUT THEIR
AWARENESS OF THE BRAND
DURING A FOURTH PERIOD OF TIME
— 62

OFFER THE SURVEY TO MEMBERS
OF THE TEST GROUP AND
THE CONTROL GROUP A SECOND TIME
IF THERE WAS NO INITIAL RESPONSE
— 64

*FIG. 4*

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

Application Number

EP 14 15 8719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous ET AL: "HTTP cookie - Wikipedia, the free encyclopedia", Wikipedia, 27 July 2012 (2012-07-27), XP055091792, Retrieved from the Internet: URL:http://en.wikipedia.org/w/index.php?title=HTTP_cookie&oldid=504459350 [retrieved on 2013-12-05] * the whole document * | 4-20 | INV. G06Q30/02 |

-----

TECHNICAL FIELDS
SEARCHED      (IPC)

G06Q

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 24 July 2014 | Kirchler, Dominik |

EPO FORM 1503 03.82 (P04E07)

Europäisches
Patentamt

European
Patent Office

Office européen
des brevets

**INCOMPLETE SEARCH**
**SHEET C**

```
Claim(s) completely searchable:
        4-20

Claim(s) not searched:
        1-3

Reason for the limitation of the search (non-patentable invention(s)):

The claimed subject-matter of claims 1 to 3 relates to processes
comprised in the list of subject-matter and activities excluded from
patentability under Art. 52(2) and (3) EPC. Claims of European patent
applications which relate to no more than such methods will not be
searched. Claims 1 to 3 disclose methods for determining changes in brand
awareness after exposure to on-line advertisement. These methods are
considered as non-technical because they concern marketing approaches
aimed at the tracking and collection of information in order to conduct
statistical analyses for the purpose of determining a brand lift index.
Marketing approaches are purely business related and thus define
non-technical subject-matter in accordance with Articles 52(2) and (3)
EPC.
```